# EUROPÄISCHE PATENTSCHRIFT

(11) **EP 1 170 161 B1**
(45) Veröffentlichungstag und Bekanntmachung des Hinweises auf die Patenterteilung: **25.01.2006**
(21) Anmeldenummer: 01114431.8
(22) Anmeldetag: 15.06.2001
(51) Int. Cl.: B60J 7/02, B60J 7/057, B62D 65/00

(54) **Fahrzeug-Dachmodul**
Roof unit for vehicle
Module de toit de véhicule

(30) Priorität: 06.07.2000 DE 10046674
(43) Veröffentlichungstag der Anmeldung: 09.01.2002
(73) Patentinhaber: Webasto Vehicle Systems International GmbH, 82131 Stockdorf (DE)
(72) Erfinder: Schätzler, Walter, 82319 Starnberg (DE)
(74) Vertreter: Wiese, Gerhard

(56) Entgegenhaltungen:
- DE-A- 3 002 246
- DE-A- 19 746 543
- DE-A- 19 851 366

## Beschreibung

Die Erfindung betrifft ein Fahrzeug-Dachmodul zur Befestigung an einem Dachrahmenbereich einer Fahrzeugkarosserie, mit zumindest einem Deckel zur wahlweisen Freigabe einer Dachöffnung im Dachmodul, mit einem Elektromotorantrieb zur Betätigung des Deckels, und mit einem vorderen Windlauf als hohler Profilbestandteil eines am Dachmodul ausgebildeten Montagerahmens.

Bei einem derartigen Fahrzeug-Dachmodul ist der Elektromotorantrieb zwischen dem Hinterrand des Windlaufs und dem Vorderrand des Deckels angeordnet. Aufgrund dieses Montageorts für den Elektromotorantrieb kommt der Deckel mit seinem Vorderrand relativ weit hinten zu liegen. Außerdem ist der Bereich zwischen dem Vorderrand des Deckels und dem Hinterrand des Windlaufs durch den Elektromotorantrieb abgedeckt, so daß dieser Bereich des Dachs nicht für eine Durchsicht vom Fahrgastraum aus zur Verfügung steht.

Nicht im Zusammenhang mit Fahrzeug-Dachmodulen, jedoch im Zusammenhang mit fest mit der Fahrzeugkarosserie integrierten Fahrzeugdächern ist es beispielsweise aus der DE 30 02 246 C2 bekannt, den Elektromotorantrieb im Bereich des Windlaufs, an dessen Unterseite anzuordnen. Ein geeignetes Dachmodul ist aus der EP 1 048 553 A2 bekannt, deren Inhalt hiermit ausdrücklich in den Offenbarungsgehalt dieser Anmeldung einbezogen wird.

Angesichts dieses Standes der Technik liegt der Erfindung die Aufgabe zugrunde, ein Fahrzeug-Dachmodul der eingangs genannten Art zu schaffen, das eine Anordnung des Deckels unmittelbar im Bereich des Hinterrands des Windlaufs und/oder eine freie Durchsicht zwischen dem Hinterrand des Windlaufs und dem Vorderrand des Deckels gewährleistet.

Gelöst wird diese Aufgabe durch die Merkmale des Anspruchs 1.

Vorteilhafte Weiterbildungen der Erfindung sind in den Unteransprüchen angegeben.

Mit anderen Worten sieht die Erfindung eine zumindest teilweise Integration des Elektromotorantriebs in den Windlauf vor. Aufgrund dieses Montageorts des Elektromotorantriebs wird im Vergleich zu der bisherigen Lösung mit einer Anordnung des Elektromotorantriebs zwischen Windlauf und Deckel erheblich Durchsicht zwischen Vorderrand des Deckels und Hinterrand des Windlaufs gewonnen und der Deckel kann mit seinem Vorderrand unmittelbar angrenzend am Hinterrand des Windlaufs angeordnet werden.

Zu einer deutlichen Preisersparnis kommt es, wenn gemäß einer Weiterbildung der Erfindung der Elektromotorantrieb vollständig im Hohlraum des Windlaufs aufgenommen ist. Um die Wartung des Elektromotorantriebs in diesem Fall problemlos zu ermöglichen, ist zumindest ein Teil der Unterseite des Windlaufs mit einer durch eine Abdeckung verschlossenen Öffnung versehen, über welche der Elektromotorantrieb von außen zugänglich ist.

Gemäß einer Weiterbildung der Erfindung steht der Elektromotor von der Unterseite des Windlaufs vor. In diesem Fall wird zwar nicht ganz dieselbe Platzersparnis erreicht, wie im Fall eines vollständig innerhalb des Windlauf angeordneten Elektromotorantriebs, dieser kann jedoch auf diese Weise problemlos von außen gewartet werden, weil er direkt zugänglich ist.

Gemäß einer vorteilhaften Weiterbildung der Erfindung ist vorgesehen, daß der Elektromotorantrieb zumindest einen Elektromotor und ein von diesem angetriebenes Getriebe umfaßt, das über ein Ritzel mit dem Deckel verbundene Antriebskabel antreibt. Die Antriebskabel verlaufen bevorzugt in Führungsrohren, welche den Windlauf rückwärtig durchsetzen, und bis in die Nähe des Ritzels verlaufen.

Nachfolgend wird die Erfindung anhand der Zeichnungen beispielhaft näher erläutert; es zeigen:
- Fig. 1: eine Längsschnitt durch den vorderen Teil eines erfindungsgemäßen Dachmoduls,
- Fig. 2: einen ähnlichen Längsschnitt wie Fig. 1, jedoch seitlich zu diesem versetzt, und
- Fig. 3: eine Längsschnittansicht des vorderen Teils einer weiteren Ausführungsform des erfindungsgemäßen Dachmoduls.

Ein Dachmodul zur Befestigung an einem Dachrahmenbereich einer Fahrzeugkarosserie umfaßt zumindest einen Deckel zur wahlweisen Freigabe einer Dachöffnung im Dachmodul und einen Elektromotorantrieb zur Betätigung des Deckels. Im vorderen Bereich des Fahrzeug-Dachmoduls ist ein Windlauf als Hohlprofilbestandteil eines als Dachmodul ausgebildeten Montagerahmens vorgesehen.

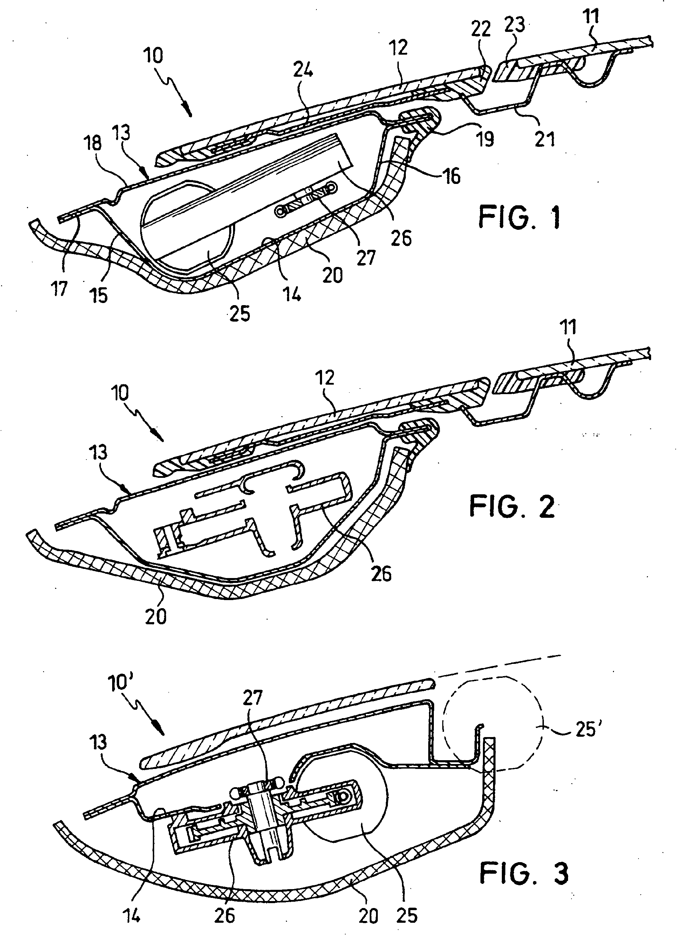

In Fig. 1 bis 3 ist das vorstehend genannte Dachmodul in seinem vorderen Bereich in Längsschnittdarstellung gezeigt. Anhand von Fig. 1 und 2 wird zunächst eine erste Ausführungsform des Dachmoduls erläutert.

Das in Fig. 1 und 2 gezeigte Dachmodul ist allgemein mit der Bezugsziffer 10 bezeichnet und umfaßt eine Dachöffnung, die durch einen Deckel 11 vollständig verschließbar ist und einen vor dem geschlossenen Deckel 11 angeordneten Windabweiser 12 in Gestalt einer Windabweiserlamelle, die um eine Querachse im Bereich ihres Vorderrands schwenkbar gelagert und dadurch mit ihrem Hinterrand in ihre aktive Position anhebbar ist. Der Windabweiser 12 ist über einem Windlauf 13 angeordnet, der ebenfalls Bestandteil des Dachmoduls 10 bzw. dessen umlaufenden Rahmens bildet. Der Windlauf 13 ist ein Hohlprofilteil und als solches Bestandteil des nicht gezeigten Montagerahmens des Dachmoduls 10. Der Windlauf 13 besteht aus einem wannenförmigen Grundkörper mit einem von vorne nach hinten ansteigenden Boden 14, zwei von diesem aufwärts nach außen schräg verlaufende vordere und hintere Wände 15 und 16 sowie aufgrund der Schnittdarstellung nicht gezeigte linke und rechte Wände. Die Wände 15, 16 enden in einem umlaufenden gemeinsamem Flanschrand 17, und der wannenförmige Windlauf 13 ist auf seiner Oberseite durch eine plattenförmige Abdeckung 18 abgedeckt, deren Rand mit dem Flanschrand 17 vereinigt, vor allem verschweißt ist. Der hintere Abschnitt des Flanschrands 17 wird von einer Lippendichtung 19 umgriffen, deren Lippe abwärts vorspringt, und an der Außenseite eines Himmelteils 20 anliegt, welches der Form der Außenkontur des Windlaufs 13 folgend zumindest partiell vor allem an dessen Boden 14 anliegt und mit seinem Vorderrand auf Höhe des vorderen Abschnitts des Flanschrands 17 des Windlaufs 13 endet. Der Deckel 11 ist mit einem Kunststoffrand 23 umspritzt und der Windabweiser 12 ist mit einem Kunststoffrand 22 umspritzt. Auf der Unterseite des Windabweisers 12 befindet sich ein in dessen Kunststoffrand integrierter Verstärkungsrahmen 24. Ein ähnlicher Verstärkungsrahmen 21 ist für den Deckel 11 vorgesehen. Der Verstärkungsrahmen 21 steht über den Vorderrand des Deckels 11 vor, bildet eine den Spalt zwischen dem hinteren Rand des Windabweisers 12 und dem vorderen Rand des Deckels 11 untergreifende, quer zur Fahrtrichtung verlaufende Wasserrinne und dient mit seinem freien Ende als Abstützung für den sich in Ruheposition befindlichen Windabweiser 12 und zur Abdichtung gegenüber dessen Kunststoffrand 22, wie aus Fig. 1 und 2 hervorgeht.

Zum Antrieb des Deckels 11 dient ein Elektromotorantrieb. Dieser Elektromotorantrieb ist wie in Fig. 1 und 2 gezeigt, vollständig in den Hohlraum des Windlaufs 13 integriert und umfaßt einen Elektromotor 25 sowie ein an dessen Antriebswelle angeschlossenes Getriebe 26, welches ein Ritzel 27 antreibt. Das Ritzel 27 steht im Eingriff mit einem nicht gezeigten Antriebskabel für den Antrieb des Deckels 11. Dieses Antriebskabel ist in einem ebenfalls nicht gezeigten Führungsrohr geführt, welches den wannenförmigen Windlauf 13 in den äußeren Bereichen im Bereich seiner Wand 16 durchsetzt.

Durch die Anordnung des Elektromotorantriebs 25, 26 im Inneren des Windlaufs 13, wird Montageraum eingespart, der üblicherweise bereitgestellt werden muß zwischen dem Hinterrand des Windlaufs 13 und dem Vorderrand des Deckels 11, wie schematisch strichliert aus Fig. 3 hervorgeht, in welcher der außerhalb des Windabweiser entsprechend dem Stand der Technik angeordnete Elektromotor mit 25' bezeichnet ist. Abgesehen davon, daß Montageraum eingespart wird, wird auf diese Weise ungestörte Durchsicht anschließend an den Hinterrand des Windlaufs 13 bereitgestellt. Ferner kann der Deckel 11 mit seinem Vorderrand 23 wesentlich weiter vorne liegend angeordnet werden, als dies beim Stand der Technik nötig war.

Fig. 3 zeigte eine weitere Ausführungsform des erfindungsgemäßen Dachmoduls 10'. Für die gleichen Teile wie in Fig. 1 sind in Fig. 3 dieselben Bezugsziffern verwendet. Im Gegensatz zu der Ausführungsform gemäß Fig. 1 und 2 ist bei der Ausführungsform gemäß Fig. 3 der Elektromotorantrieb nicht vollständig im Hohlraum des Windlaufs 13 integriert, sondern lediglich teilweise in diesem aufgenommen, nämlich mit dem oberen, das Ritzel 27 tragenden Teil des Getriebes 26, das im übrigen an der Unterseite des Bodens 14 des Windablaufs 13 zu liegen kommt und dort am Boden 14 befestigt ist. In ähnlicher Weise ist der Elektromotor 25 durch eine entsprechende Einformung teilweise im Inneren des Windlaufs 13 aufgenommen.

Die Ausführungsformen gemäß Fig. 3 hat den Vorteil, daß anfallende Reparaturen am Elektromotor bzw. Getriebe problemlos ausgeführt werden können, weil diese beiden Aggregate nach Entfernung des Himmelteils 20 von außen zugänglich sind. Um eine ähnliche Reparatur bei der Ausführungsform gemäß Fig. 1 und 2 durchführen zu können, muß der Boden 14 des Windlaufs 13 zumindest teilweise abnehmbar gestaltet sein, so daß Zugang zu den Aggregaten Elektromotor und Getriebe nach Abnahme des Himmelteils 20 möglich ist.

### Bezugszeichenliste

- 10: Dachmodul
- 11: Deckel
- 12: Windabweiser
- 13: Windlauf
- 14: Boden
- 15: Wand
- 16: Wand
- 17: Flanschrand
- 18: Abdeckung
- 19: Lippendichtung
- 20: Himmelteil
- 21: Verstärkungsrahmen
- 22: Kunststoffrand
- 23: Kunststoffrand
- 24: Verstärkungsrahmen
- 25: Elektromotor
- 26: Getriebe
- 27: Ritzel

## Patentansprüche

1. Fachzeug-Dachmodul zur Befestigung an einem Dachrahmenbereich einer Fahrzeugkarosserie, mit zumindest einem Deckel (11) zur wahlweisen Freigabe einer Dachöffnung im Dachmodul (11), mit einem Elektromotorantrieb (25, 26) zur Betätigung des Deckels (11), und mit einem vorderen Windlauf (13) als hohler Profilbestandteil eines am Dachmodul (10) ausgebildeten Montagerahmens, **dadurch gekennzeichnet, daß** der Elektromotorantrieb (25, 26) zumindest teilweise im Windlauf (13) aufgenommen ist.

2. Dachmodul nach Anspruch 1, **dadurch gekennzeichnet, daß** der Elektromotorantrieb (25, 26) vollständig im Wndlauf (13) aufgenommen ist.

3. Dachmodul nach Anspruch 1, **dadurch gekennzeichnet, daß** der Elektromotorantrieb (25, 26) von der Unterseite des Windlaufs (13) vorsteht.

4. Dachmodul nach Anspruch 1,2 oder 3, **dadurch gekennzeichnet, daß** der Elektromotorantrieb (25, 26) zumindest einen Elektromotor (25) und ein von diesem angetriebenes Getriebe (26) umfaßt, das über ein Ritzel (27) mit dem Deckel (11) verbundene Antriebskabel antreibt.

5. Dachmodul nach Anspruch 4, **dadurch gekennzeichnet, daß** Antriebskabel-Führungsrohre den Windlauf (13) rückwärtig durchsetzend bis in die Nähe des Ritzels (27) verlaufen.

6. Dachmodul nach einem der Ansprüche 1 bis 5, **dadurch gekennzeichnet, daß** die Vorderkante der Dachöffnung nahe zum hinteren Rand des Windlaufs (13) zu liegen kommt.

## Claims

1. Vehicle roof module for fixing to a roof frame area of a vehicle body, comprising at least one cover (11) for optionally opening a roof opening in the roof module (11), an electric motor drive (25, 26) for actuating the cover (11), and a front apron (13) as a hollow profiled component part of a mounting frame formed on the roof module (10), **characterized in that** the electric motor drive (25, 26) is accommodated at least partially within the apron (13).

2. Roof module according to Claim 1, **characterized in that** the electric motor drive (25, 26) is accommodated completely within the apron (13).

3. Roof module according to Claim 1, **characterized in that** the electric motor drive (25, 26) projects from the underside of the apron (13).

4. Roof module according to Claim 1, 2 or 3, **characterized in that** the electric motor drive (25, 26) comprises at least one electric motor (25) and a gearbox (26) which is driven by the motor and, via a pinion (27), drives drive cables connected to the cover (11).

5. Roof module according to Claim 4, **characterized in that** drive cable guide tubes run rearward through the apron (13) as far as the vicinity of the pinion (27).

6. Roof module according to one of Claims 1 to 5, **characterized in that** the front edge of the roof opening comes to lie close to the rear edge of the apron (13).

## Revendications

1. Module de toit de véhicule à fixer sur une région de cadre de toit d'une carrosserie de véhicule, avec au moins un panneau (11) pour libérer sélectivement une ouverture de toit dans le module de toit (10), avec un entraînement (25, 26) à moteur électrique pour actionner le panneau (11), et avec un tablier avant (13) comme élément profilé creux d'un cadre de montage configuré sur le module de toit (10), **caractérisé en ce que** l'entraînement (25, 26) à moteur électrique est reçu au moins partiellement dans le tablier (13).

2. Module de toit selon la revendication 1, **caractérisé en ce que** l'entraînement (25, 26) à moteur électrique est reçu en totalité dans le tablier (13).

3. Module de toit selon la revendication 1, **caractérisé en ce que** l'entraînement (25, 26) à moteur électrique dépasse du dessous du tablier (13).

4. Module de toit selon la revendication 1, 2 ou 3, **caractérisé en ce que** l'entraînement (25, 26) à moteur électrique comprend au moins un moteur électrique (25) et un mécanisme de transmission (26) qui est entraîné par ce moteur et qui entraîne par l'intermédiaire d'un pignon (27) des câbles d'entraînement reliés au panneau (11).

5. Module de toit selon la revendication 4, **caractérisé en ce que** des tubes de guidage de câbles d'entraînement s'étendent jusqu'à proximité du pignon (27) en traversant le tablier (13) sur le côté arrière.

6. Module de toit selon l'une des revendications 1 à 5, **caractérisé en ce que** l'arête avant de l'ouverture de toit vient se placer à proximité du bord arrière du tablier (13).
